# EUROPEAN PATENT APPLICATION

(11) **EP 1 638 255 A1**
(43) Date of publication of application: **22.03.2006**
(21) Application number: 04736575.4
(22) Date of filing: 10.06.2004
(51) Int. Cl.: H04L 12/28, H04B 7/26

(54) **RADIO LAN COMMUNICATION SYSTEM**

(30) Priority: 23.06.2003 JP 2003177528
(71) Applicant: THE TOKYO ELECTRIC POWER COMPANY INCORPORATED, Tokyo 100-8560 (JP)
(72) Inventor: KATSUMATA, T., c/o The Tokyo Elec. Power Co. Inc., Tokyo 100-8560 (JP); KOHARAGI, T., c/o The Tokyo Elec. Power Co. Inc., Tokyo 100-8560 (JP); NOMURA, H., c/o The Tokyo Elec. Power Co. Inc., Tokyo 100-8560 (JP)
(74) Representative: Popp, Eugen
(86) International application number: PCT/JP2004/008480
(87) International publication number: WO 2004/114601

(57) **Abstract**

A base station includes: a data classification function for classifying data to be transmitted to terminals FWA and NWA into audio data and terminal-basis ordinary data and generating downstream communication traffic information; a queuing function for generating an ordinary data transmission queue and an audio data transmission queue from the classified data; a communication quality control parameter setting function for setting communication quality control parameters for the respective queues; a transmission and reception portion for transmitting data in the queues according to the communication quality control parameters at a time of transmission; a reception data detection function for acquiring upstream communication traffic information from reception data received from each of the terminals; and a communication quality control parameter control function for dynamically adjusting each of the communication quality control parameters in the communication quality control parameter setting function, based on the downstream and upstream communication traffic information.

## Description

### Technical Field

The present invention relates to a wireless LAN communication system, and more particularly to a communication priority control in a wireless LAN communication system using a CSMA (carrier sense multiple access) method.

### Background Art

In the CSMA method, a terminal (generally, a node) which desires to transmit data checks if communications are now being performed between a base station and another terminal. When communications are being performed, the terminal waits until the communications end. Upon the end of the communications, respective terminals which desire to transmit data start data transmission. At this time, every terminal equally has a right of transmission. If plural terminals start transmission almost at the same time, plural pieces of transmitted data collide at the base station. For this reason, the terminal which desires to transmit data monitors a communication state of the base station when transmitting a signal. If data is broken by a collision, the terminal immediately transmits a jamming signal for a fixed period of time, and then stops the transmission. The jamming signal is a special signal used to ensure the collision detection. After that, the terminal, which has been attempting to transmit data, waits for a certain "random" period of time and attempts transmission again. In a case where a collision occurred every time retransmission was attempted for a predetermined number of times, the terminal judges that the transmission has failed, and lets an upper layer retry the transmission.

An example of controlling priority for smooth communication control in such a communication system is an EDCF (extended-distribution coordination function). The EDCF is an enhanced DCF to perform priority control, in which communication priority is given to respective queues generated according to priority, and a virtual CSMA/CA (carrier sense multiple access with collision avoidance method) is performed among the queues. For example, refer to "Trend in IEEE 802.11 and its product development status" written by Masahiro Takagi and two others, 2002, Toshiba review, vol. 57, No. 10, the Internet <URL: http://www.toshiba.co.jp/tech/review/2002/10/5710pdf/a05.pdf>.

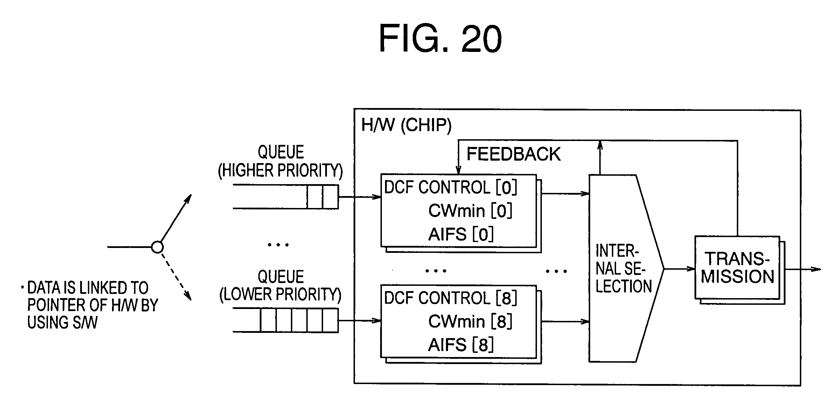

In priority control in a wireless LAN communication system using the conventional CSMA (carrier sense multiple access) method as described above, the communication priority given to respective queues generated according to priority is fixed, for example, as in the case of the EDCF. For example, as shown in Fig. 20, in a transmitter provided with the conventional EDCF, data is linked by S/W (software) with use of a pointer of H/W (hardware), and data to be transmitted are classified by priority to form respective queues. Then, data selected by an inner selecting portion is transmitted from a transmission portion according to QoS parameters (AIFS, CWmin) [backoff by QoS parameters] for each priority, set in a DCF control portion. However, in the EDCF, the QoS (communication quality control) parameters are respectively fixed values, without taking transmission destinations into consideration. For this reason, there is a problem in that when a specific one of plural terminals in the communication area of one base station frequently transmits data having a large amount of information, for example, the specific terminal exclusively uses the base station, and therefore other terminals cannot perform communications for a long period of time, making it impossible to perform dynamic control for smooth communications according to situations.

The present invention has been made to solve the above-mentioned problem, and has an object to provide a wireless LAN communication system using a CSMA method, in which communication priority is dynamically changed, generally, based on a communication state or an intention of a communication management side such that communications can be performed more smoothly according to situations.

### Disclosure of the Invention

In view of the above-mentioned problem, the present invention has been made to provide a wireless LAN communication system using a CSMA method including: a base station; and plural terminals, the wireless LAN communication system being characterized in that the base station includes: a data classification function for classifying data to be transmitted to the terminals into audio data and terminal-basis ordinary data and generating downstream data communication traffic information; a queuing function for generating an ordinary data transmission queue and an audio data transmission queue by queuing the data classified by the data classification function; a communication quality control parameter setting function for setting communication quality control parameters respectively for the ordinary data transmission queue and the audio data transmission queue; a transmission and reception portion for transmitting data from the ordinary data transmission queue and from the audio data transmission queue according to the communication quality control parameters at a time of transmission; a reception data detection function for acquiring upstream communication traffic information from reception data received from each of the terminals; and a communication quality control parameter control function for dynamically adjusting each of the communication quality control parameters in the communication quality control parameter setting function, based on the downstream and upstream communication traffic information.

### Brief Description of the Drawings

Fig. 1 is a diagram showing a schematic configuration of a wireless LAN communication system according to the present invention;
Fig. 2 is a diagram schematically showing an example of a hardware configuration of a base station of the wireless LAN communication system according to the present invention;
Fig. 3 is a diagram schematically showing an example of a hardware configuration of a terminal of the wireless LAN communication system according to the present invention;
Fig. 4 is a diagram schematically showing respective communication control portions of a base station and a terminal of a wireless LAN communication system according to an embodiment of the present invention;
Fig. 5 is a diagram showing an example of an active terminal count table in the wireless LAN communication system of the present invention;
Fig. 6 is a diagram showing a timing chart of an FWA section and an FWA/NWA section in the wireless LAN communication system of the present invention;
Fig. 7 is a diagram showing an example of an FWA-section calculation table in the wireless LAN communication system of the present invention;
Fig. 8 is a diagram showing an example of an FWA-section adjusting table in the wireless LAN communication system of the present invention;
Fig. 9 is a diagram showing examples of QoS parameters in the wireless LAN communication system of the present invention;
Fig. 10 is Diagrams showing an example of a QoS parameter table in the wireless LAN communication system of the present invention;
Fig. 11 is a diagram showing an example of a terminal-basis traffic control table in the wireless LAN communication system of the present invention;
Fig. 12 is a diagram showing an example of a terminal-basis downstream traffic control table in the wireless LAN communication system of the present invention;
Fig. 13 is a diagram showing an example of a transmission rate coefficient table in the wireless LAN communication system of the present invention;
Fig. 14 is a diagram showing an example of an extended element "QoS parameter" format in the wireless LAN communication system of the present invention;
Fig. 15 is a diagram showing an example of an extended element "terminal-basis QoS setting" format in the wireless LAN communication system of the present invention;
Fig. 16 is a flowchart showing an example of data traffic control in the wireless LAN communication system of the present invention;
Fig. 17 is a diagram showing relations among the tables and the QoS parameters in data communications in the wireless LAN communication system of the present invention;
Fig. 18 is a flowchart showing an example of comprehensive and actual upstream-data-traffic control in the wireless LAN communication system of the present invention;
Fig. 19 is a flowchart showing an example of comprehensive and actual downstream-data-traffic control in the wireless LAN communication system of the present invention; and
Fig. 20 is a diagram showing an example of a transmitter provided with a conventional EDCF.

### Best Mode for carrying out the Invention

The present invention can be basically applied to all wireless LAN communication systems using a CSMA method. However, in the following description, a system will be described in which functions unique to the present invention are added to an EDCF using the CSMA method conforming to IEEE 802.11 to make priority variable.

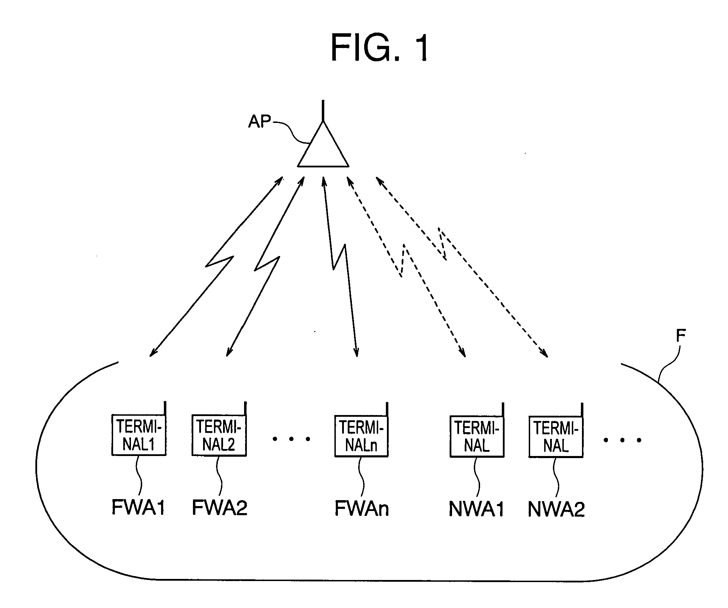

Fig. 1 shows a schematic configuration of a wireless LAN communication system according to the present invention, in which plural (for example, n) terminals (1 to n) FWA1 to FWAn (fixed wireless-access terminals) each having a function according to the present invention exist in a communication area F of a base station AP having a function according to the present invention. "The function according to the present invention" means an EDCF in which the priority is made variable, and it is referred to as a modified EDCF (M-EDCF) hereinafter. The base station AP having the function according to the present invention can perform communications also with terminals NWA1, NWA2... (nomadic wireless-access terminals) having a conventional DCF or EDCF, existing in the communication area F as long as the communications are based on the respective functions of the terminals.

In the present invention, (1) QoS parameters are dynamically changed according to the amount of communication traffic to realize the fairness of communication opportunity (a fairness function), in particular, among downstream terminals; (2) the base station of the present invention can be used by not only terminals under the control of the system of the present invention but also terminals which are under the control of a system using the CSMA method conforming to IEEE 802.11 and have the EDCF; and (3) smooth communications are performed also for audio data with the highest priority being given to VoIP data, which is audio data where no communication delay is allowed.

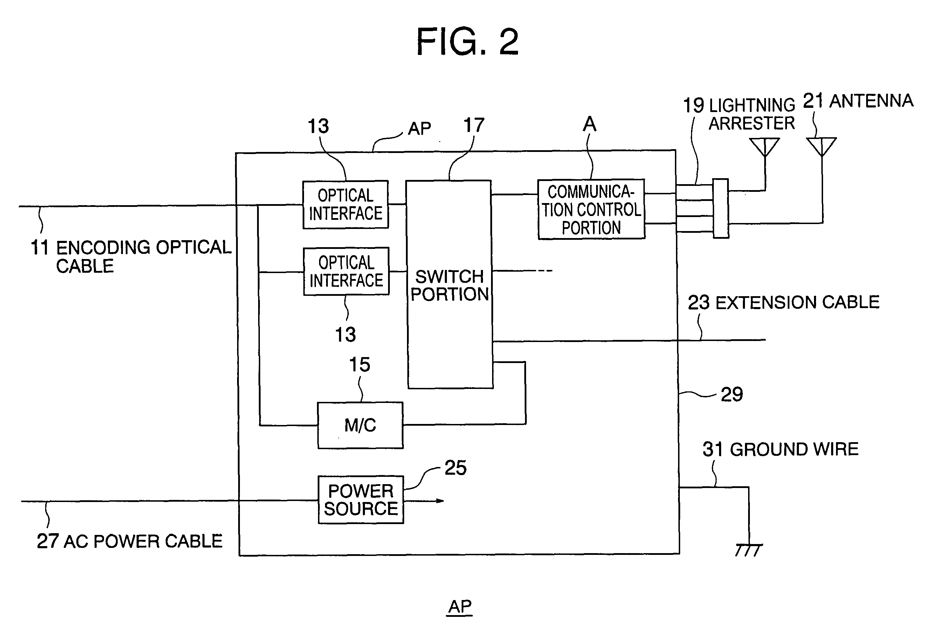

Fig. 2 schematically shows an example of a hardware configuration of the base station AP. An encoding optical cable 11 extending from an NMS (network management system) is connected to a switch portion 17 via an optical interface 13 performing conversion between an optical signal and an electronic signal or an M/C (media converter) 15 having a special conversion function. Through the operation of the switch portion 17, a communication control portion A according to the present invention is switched to be connected to terminals FWAs and terminals NWAs, and radio communications are performed therebetween through an antenna 21 having a lightning arrester 19. The switch portion 17 has an extension cable 23 for connecting to another communication control portion (not shown) or the like. A power source 25 receives electric power supply through an external AC power cable 27. A housing 29 for accommodating these components is grounded by a ground wire 31. Note that the configuration of the base station is not limited to this.

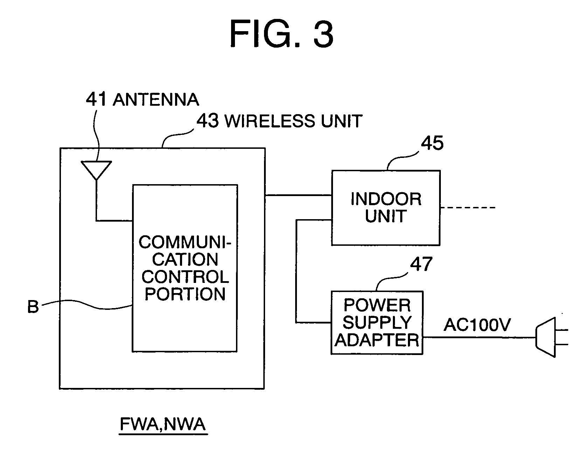

Fig. 3 schematically shows an example of a hardware configuration of the terminals FWA and NWA. Here, a hardware configuration of a fixed terminal is shown. A communication control portion B according to the present invention is configured as a wireless unit 43 integrated with, for example, an antenna 41 having directivity, and is connected to an indoor unit 45 having a power supply adapter 47 as a power source. Note that the wireless unit 43 may be a portable wireless unit having a built-in power source, and the antenna may be a nondirectional antenna. Note that the configuration of the terminal is not limited to this.

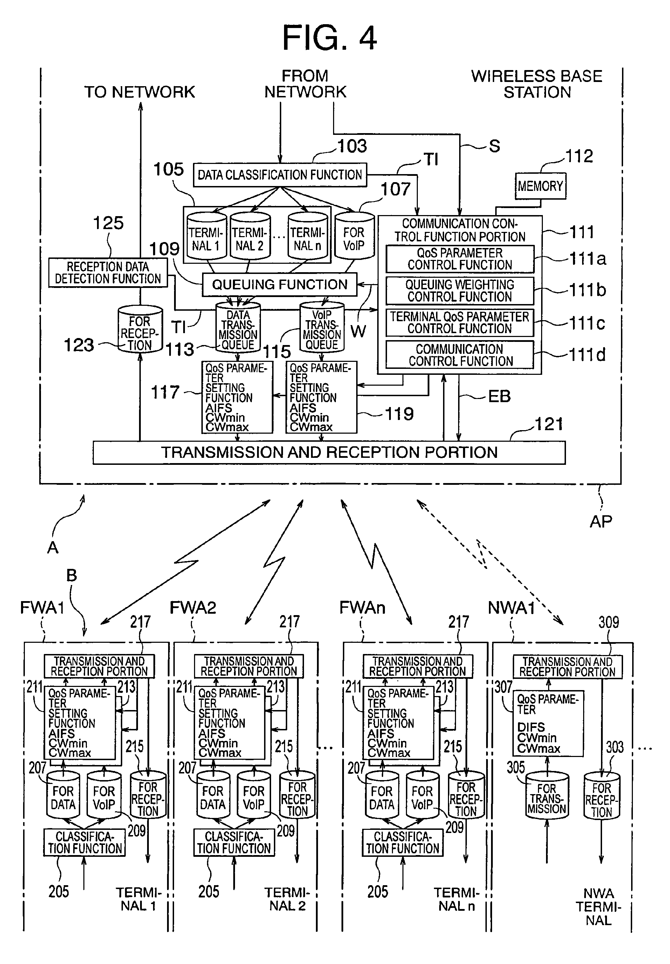

Fig. 4 is a diagram showing configurations of the respective communication control portions of a wireless base station AP and plural terminals FWA1 to FWAn and NWA1 which communicate with the base station AP in a wireless LAN communication system according to an embodiment of the present invention.

In the communication control portion A of the base station AP in Fig. 4, data collectively transmitted from a network is divided by a data classification function 103 into data other than VoIP (audio data) (referred to as ordinary data) and VoIP data. The ordinary data is divided and sent to terminal-basis ordinary data queues 105 for respective terminals, and the VoIP data is collectively sent to a VoIP queue 107. From the terminal-basis ordinary data queues 105 and the VoIP queue 107, an ordinary data transmission queue 113 and a VoIP transmission queue 115 are generated by a queue operation of a queuing function 109. The queuing function 109 treats the VoIP data as the highest priority data and other ordinary data as a weighted round-robin. The data in the ordinary data transmission queue 113 and the VoIP transmission queue 115 is transmitted to the terminals FWA1 to FWAn and NWA1 ... by a transmission and reception portion 121 based on QoS parameters (AIFS, CWmin, CWmax) set in QoS (communication quality control) parameter setting functions 117 and 119. At this time, a weight W in the queuing function 109 and the QoS parameters in the QoS parameter setting functions 177 and 119 are dynamically changed for each terminal by a communication control function portion 111 based on communication traffic conditions and the like.

The communication control function portion 111 acquires downstream and upstream communication traffic information TI, for example, from the data classification function 103 and a reception data detection function 125, and has a memory (storage function) 112 for storing various tables, which will be described later, for determining the weight W and the QoS parameters. Based on these pieces of information, the following functions included in the communication control function portion 111 are controlled. Those functions are a QoS parameter control function 111a for controlling the QoS parameters in the base station AP, a queuing weighting control function 111b for controlling the weight W in queuing in the base station AP, a terminal QoS parameter control function 111c for controlling the QoS parameters in the base station AP by periodically transmitting an extended beacon to be described later, and a communication control function 111d for performing other communication control such as control of communication sections. Data from the terminals FWA1 to FWAn and NWA1 ... is received by the transmission and reception portion 121 as reception data 123 and passes to the network side. At this time, the reception data detection function 125 detects communication traffic information (such as a transmitting terminal and the type of data) of the reception data.

The communication control portion B of each of the terminals FWA1 to FWAn has the same configuration, and thus the terminal FWA1 will be described, for example. Reception data 215 received by a transmission and reception portion 217 is directly taken into the terminal. A classification function 205 generates an ordinary data transmission queue 207 and a VoIP data transmission queue 209 from transmission data, and the data is transmitted by the transmission and reception portion 217 to the base station AP based on respective QoS parameters (AIFS, CWmin, CWmax) set by QoS parameter setting functions 211 and 213. The QoS parameters set by the QoS parameter setting functions 211 and 213 are dynamically changed for each terminal, based on communication traffic conditions, by an extended beacon EB, which is obtained by extending a beacon in the EDCF, periodically transmitted from the base station AP to the terminals FWA1 to FWAn (EB shown in Fig. 4 indicates a control signal from the communication control function portion 111 to the transmission and reception portion 121).

In the communication control portion B of the terminals NWA1 ... having the EDCF, QoS parameters 307 at the time of transmission are fixed, and ordinary data and VoIP data are collectively transmitted and received by a transmission and reception portion 309 as transmission data 305 and reception data 303.

In the QoS parameters (AIFS, CWmin, CWmax), the AIFS (arbitrary inter-frame spacing) indicates a delay time from the time when the last communications in the system ended to the time when the own terminal can next start transmission, and the CWmin and the CWmax (minimum and maximum contention windows) indicate priorities in a case where a collision occurs during transmission after the delay time.

In the present invention, downstream data from the base station AP is divided and sent to the terminal-basis ordinary data queue 105 and the VoIP queue 107 to realize the fairness among the downstream terminals FWA1 to FWAn, and at the same time, VoIP is transmitted with the shortest delay time at the highest priority. Upstream data from the terminals FWA1 to FWAn is divided and sent to the ordinary data queue 207 and the VoIP queue 209, and VoIP is transmitted with the shortest delay time at the highest priority. In this manner, all VoIP data of the terminals FWA1 to FWAn are equally given the highest priority, so that the fairness can be realized.

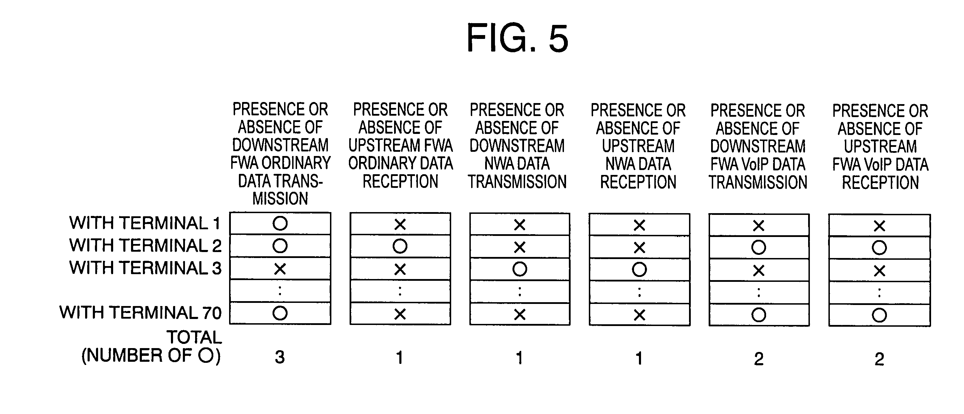

Further, an active terminal count table (see Fig. 5) is provided, with which the QoS parameters (AIFS, CWmin, CWmax) are dynamically changed to realize the fairness of upstream/downstream ratio. The extended beacon EB from the base station AP is used to change the QoS parameters in the terminals FWA1 to FWAn. Upon reception of the extended beacon EB, the terminals FWA1 to FWAn change the QoS parameters for their own transmission queues. The fairness among respective upstream terminals is realized by a rule of equal opportunity in the DCF method.

The terminals FWA1 to FWAn have an access method compatible with that of the terminals NWA1 ... using the DCF or EDCF method, and they are collectively accommodated. However, a period of time dedicated only to FWA terminals, i.e., the terminals FWA1 to FWAn, is provided, to thereby give priority to the FWA terminals.

With an instruction S (see the base station AP in Fig. 4) from the NMS (network management system, not shown) which manages a plurality of base stations identical to the above-mentioned base station AP, a function for controlling (limiting/expanding) the amount of communication traffic with a particular terminal being specified is supported.

### Queuing processing

In downstream transmission at the base station AP, reception data collectively transmitted from the network is divided into the ordinary data and the VoIP data by the data classification function 103. The ordinary data is distributed to the terminal-basis ordinary data queues (with TCP or UDP) 105 for respective terminals, and the VoIP data is collectively distributed to the VoIP queue 107. The distribution is performed for each terminal based on a destination MAC address in each packet of the reception data and MAC address information in association terminal information (not shown) stored by the base station AP. Further, a VoIP packet is identified to be enqueued in the VoIP queue 107. In the queuing function 109, the length of a data queue is limited for each terminal, and excessive traffic overflowing the queue is discarded without enqueuing.

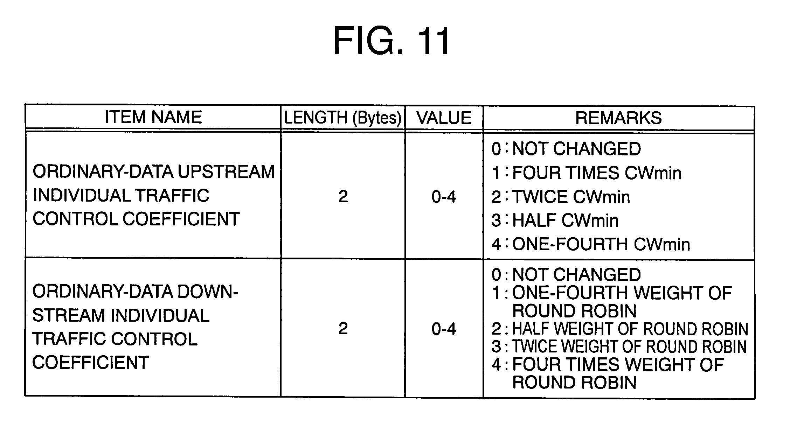

VoIP packets are transmitted with the highest priority if they include data. The QoS parameters have been specified so as to give the highest priority to VoIP. A dequeue logic among the terminals is basically the round robin for the data packet in order to maintain the fairness among the terminals, and data packets are transmitted based on the priority specified by the QoS parameters in the QoS parameter setting functions 177 and 119. The round robin is weighted according to the content of a terminal-basis traffic control table (downstream) (see Fig. 11).

In upstream transmission at the terminals FWA1 to FWAn, the classification queuing function 205 divides data to be transmitted and sends to the data transmission queue (with TCP or UDP) 207 and the VoIP data transmission queue 209, and VoIP packets are transmitted with higher priority.

### Upstream/downstream ratio control

For upstream/downstream ratio control, a table used to manage the presence or absence of transmission and reception on a terminal basis is provided, for example, in the memory 112 of the base station AP, so that the base station AP can acquire the number of destination terminals to which downstream data is being transmitted from the base station AP and the number of terminals FWA1 to FWAn and NWA1 ... from which upstream data is being transmitted, as shown in the active terminal count table in Fig. 5. The communication control function 111d acquires downstream and upstream communication traffic information TI from the data classification function 103 and the reception data detection function 125 to create information on the presence or absence of transmission and reception on a terminal basis. In the table shown in Fig. 5, the initial value of the presence or absence of transmission and reception is "transmission (or reception) absence" (x). When an upstream/downstream packet is detected, "transmission (or reception) presence" (o) is set in the judgment of the presence or absence of packet transmission/reception for a corresponding terminal. The presence or absence of transmission and reception is separately recorded in the following six fields: downstream FWA ordinary data; upstream FWA ordinary data; downstream NWA data; upstream NWA data; downstream FWA VoIP data; and downstream FWA VoIP data.

For a terminal where no packet transmission or reception is performed for a given period of time (for example, approximately 500 ms), "transmission (or reception) absence" is set. The total numbers of "transmission (or reception) presence" is used as weighting references for the base station and terminals, respectively, and also used as references for dynamically changing the QoS parameters. An upstream/downstream communication traffic ratio is obtained by, for example, [number of "transmission (or reception) presence"/number of association terminals for the base station in question]. The association terminals mean terminals which can currently communicate with the base station.

From the information in the active terminal count table of Fig. 5, CWmin values to be set for the terminals FWA1 to FWAn are placed on an extended beacon EB to dynamically change the CWmin values set in the QoS parameter setting functions 211 and 213 of the terminals FWA1 to FWAn. At the same time, the CWmin values set in the QoS parameter setting functions 177 and 119 of the base station AP itself are also changed.

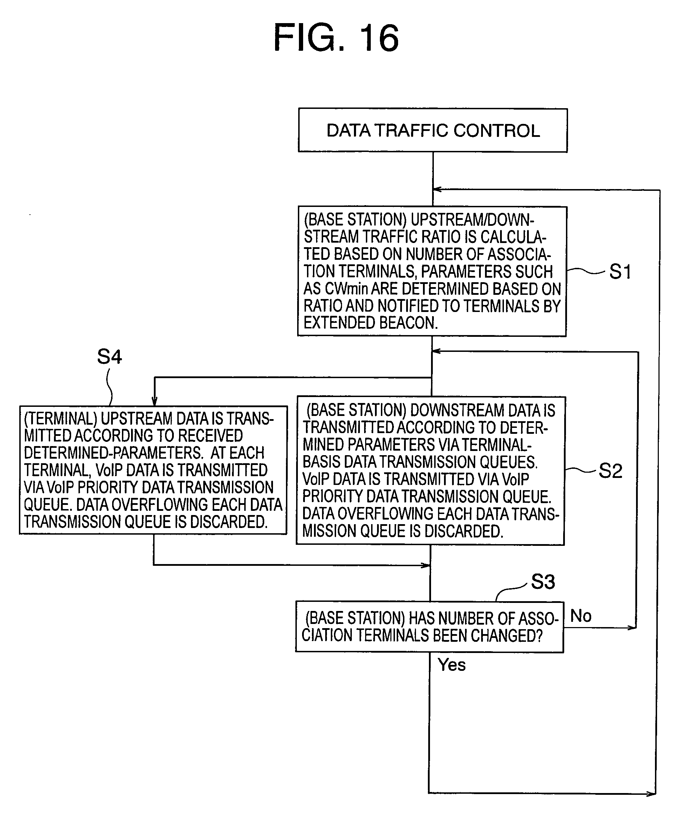

Fig. 16 shows a flowchart of an example of data traffic control. First, in the base station AP, the upstream/downstream communication traffic ratio is calculated based on the number of association terminals and information in the active terminal count table of Fig. 5. Based on the calculated upstream/downstream communication traffic ratio, the QoS parameters such as the CWmin are determined to be notified to each terminal FWA by an extended beacon EB (Step S1).

In the base station AP, downstream data is transmitted according to the determined QoS parameters. Of the downstream data, ordinary data is transmitted through the data transmission queues for respective terminals, VoIP data is collectively transmitted through the VoIP transmission queue given the highest priority, and data overflowing each data transmission queue is discarded (Step S2).

In the terminal FWA, upstream data is transmitted according to the received QoS parameters. Of the upstream data, VoIP data is transmitted through the VoIP transmission queue given the highest priority, and data overflowing each data transmission queue is discarded (Step S3).

In the base station AP, when the number of association terminals changes, the process is returned to Step S1 to calculate a communication traffic ratio again (Step S4).

The number of times of upstream and downstream various-data communications within a predetermined period of time is obtained for each terminal in the same manner as for the active terminal count table of Fig. 5, and the QoS parameters are controlled such that the priority of a terminal having a larger number of times of communications than a predetermined threshold is lowered separately for upstream and downstream, whereby the fairness is realized.

A ratio of the number of FWA terminals transmitting upstream FWA ordinary data to upstream NWA data is used as a reference to calculate a length of an FWA section (M-EDCF method section) and a length of an FWA/NWA section (M-EDCF/EDCF-DCF method section).

### FWA section and FWA/NWA section

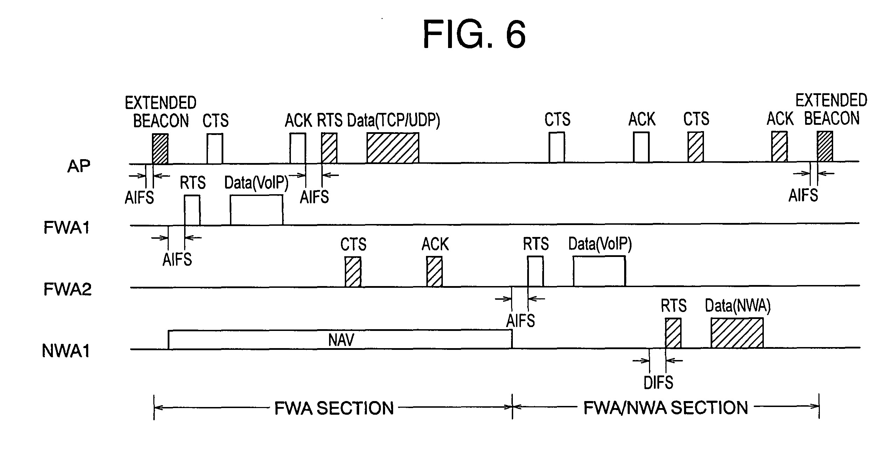

Fig. 6 shows a timing chart of an FWA section (M-EDCF method section) and an FWA/NWA section (M-EDCF/EDCF-DCF method section). The FWA section and the FWA/NWA section are provided in order to implement priority control among the terminals FWA1 to FWAn while keeping the priority of the terminals NWAs lower than that of the terminals FWAs to avoid an increase in collision frequency.

An operation between the base station AP, and the terminals FWA1 and FWA2 and the terminal NWA1 will be described with reference to Fig. 6. When an extended beacon EB (including information for setting NAV) is transmitted from the base station AP to the terminals FWA1 and FWA2 and the terminal NWA1, the terminal NWA1 cannot perform transmission while the NAV is set. The terminal FWA1, for example, sends a transmission request RTS to the base station AP after AIFS (arbitrary inter-frame spacing), which is a delay time currently set for the terminal FWA1. The base station AP responds with transmission consent CTS to the transmission request RTS. The terminal FWA1 transmits VoIP data DATA, and the base station AP responds with acknowledgment ACK thereto. Using a similar procedure, now, the base station AP transmits ordinary data (DATA) to the terminal FWA2. When the NAV is released to end the FWA section and start the FWA/NWA section, the terminal FWA2 first transmits VoIP data (DATA) to the base station AP following a similar procedure. Next, the terminal NWA1 transmits ordinary data (DATA) to the base station AP also according to a similar procedure.

Here, the extended beacon EB transmitted from the base station AP to the terminals FWAs and the terminal NWA includes, in addition to the set QoS parameters such as the CWmin, a parameter CFPMaxDuration (contention-free period maximum delay) for setting NAV for the terminals NWA1, ... to create a situation where the terminals NWA1, ... do not perform transmission for a given period of time. Based on the parameter CFPMaxDuration, the ratio of the FWA section to the FWA/NWA section between extended beacons EBs is set.

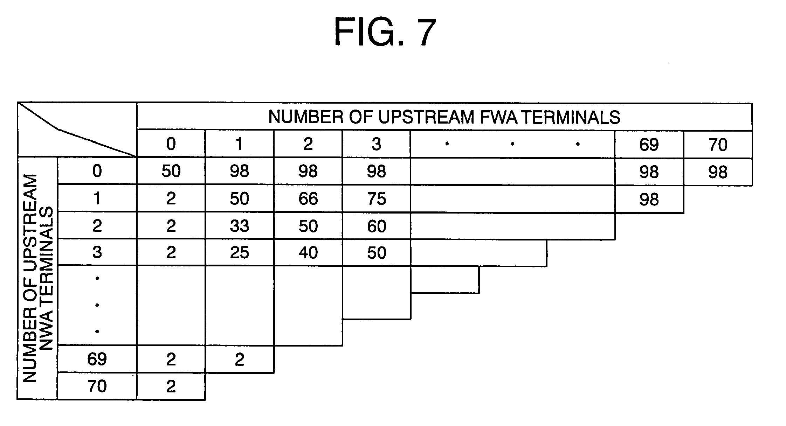

The value of CFPMaxDuration is determined by using an FWA-section calculation table shown in Fig. 7. The FWA-section calculation table is used to calculate the duration of the FWA section based on the ratio of the number of FWA terminals transmitting upstream FWA ordinary data to upstream NWA data in the active terminal count table of Fig. 5. The FWA-section calculation table is stored, for example, in the memory 112 of the base station AP.

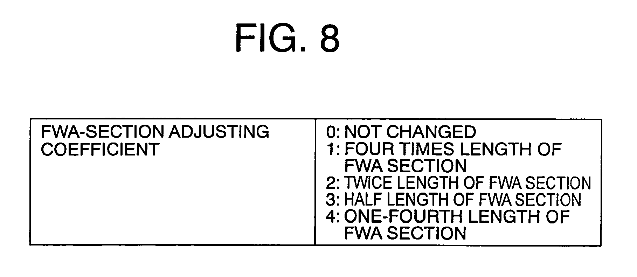

Fig. 8 shows an example of an FWA/NWA section ratio setting (FWA-section adjusting table) based on an instruction S transmitted from the NMS (network management system) to the base station AP, with respect to a section length calculated by using the FWA-section calculation table of Fig. 7. The ratio can be controlled by changing the FWA-section adjusting table of Fig. 8. The ratio can take five values of 1/4, 1/2, 1 (not controlled), 2, and 4, and the M-EDCF method section, which is the FWA section, falls within a range from 2 [ms] to 98 [ms]. This ratio is also reflected in the weight W in downstream dequeuing, that is, queuing by the queuing function 109. Note that a beacon interval, which largely affects the respective parameters for realizing the fairness, is fixed to 100 ms.

### QoS parameters

When the CWmin value in the QoS parameters is reduced to increase the priority of the base station AP or a terminal FWA, a packet-collision frequency in a radio section may be increased, as shown in the following examples.

### <Examples>

When 64 terminals transmit data with CWmin being set to 15 for the base station and all the terminals, the average number of terminals which have an identical backoff time is obtained as follows : 64 / (15 + 1) = 4.

When 64 terminals transmit data with CWmin being set to 63 for the base station and all the terminals, the average number of terminals which have an identical backoff time is obtained as follows: 64 / (63 + 1) = 1.

Accordingly, an M-EDCF period and an NWA period are provided in order to implement priority control among the terminals FWAs while keeping the priority of the terminals NWAs, that is, NWA terminals, lower than that of the terminals FWAs, that is, FWA terminals, and avoiding an increase in collision frequency. In the M-EDCF period, the QoS parameters of the base station AP and the terminals FWAs can be freely set. The CWmin value can also be set larger.

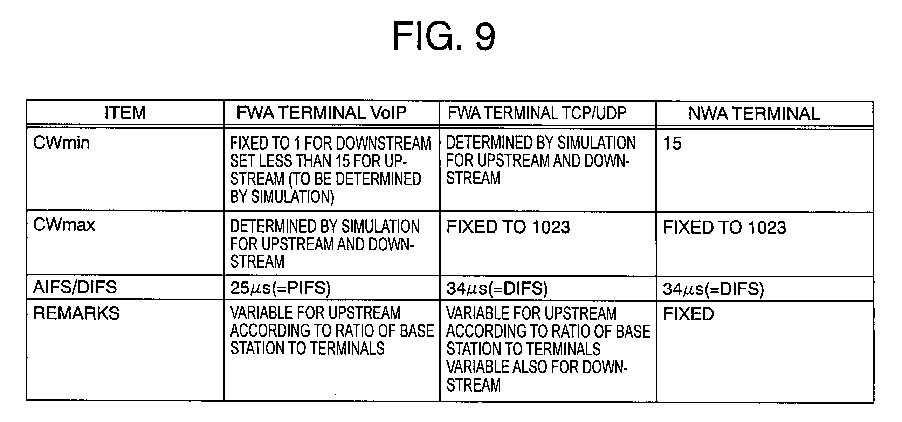

The QoS parameters are set, for example, as shown in Fig. 9. The QoS parameters are dynamically changed according to the ratio control among the base station and the terminals.

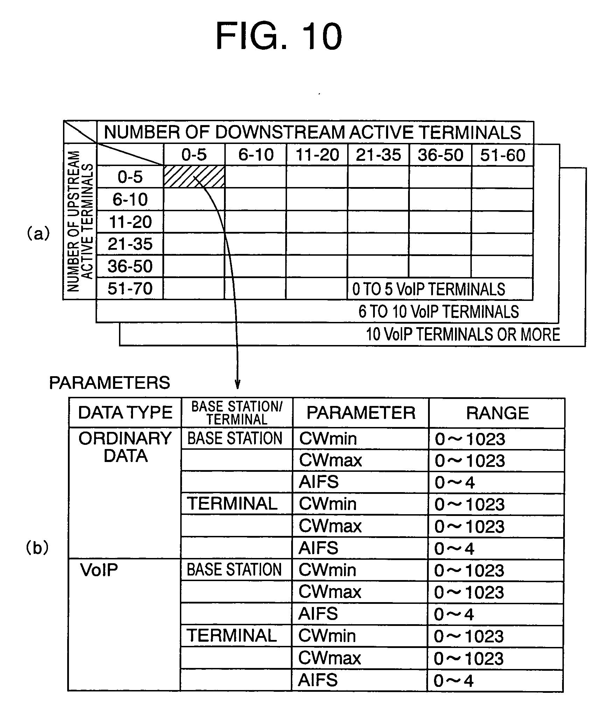

QoS parameter tables shown in Figs. 10(a) and 10 (b) are used to dynamically change the QoS parameters according to the number of upstream active terminals, the number of downstream active terminals, and the number of VoIP active terminals. An active terminal count table shown in Fig. 10 (a) is consulted by the calculated numbers of terminals to find optimum values for the QoS parameters, and the respective parameters are determined as shown in Fig. 10 (b).

### Individual band-limiting control for particular user

A function for individually controlling band limiting with a particular user being specified is supported. In upstream transmission, the function is realized by changing CWmin by an extended beacon EB. In downstream transmission, the function is realized by changing the weight W in dequeuing.

With an instruction S (see the base station AP of Fig. 4) transmitted from the NMS via the base station AP, parameters are specified for a terminal FWA which is a traffic-control target. Contents to be set include, as shown in Fig. 11 (terminal-basis traffic control table), a modification parameter of CWmin for upstream ordinary data and a dequeuing weight for downstream ordinary data. Since the set contents are stored in a flash memory (not shown, it is provided in the QoS parameter setting function or the like of the terminal FWA of Fig. 4, for example) in the terminal FWA, information thereof is kept even after the terminal FWA is reset. After the reset, re-association is necessary to enable the settings. Note that even when a best-base-station selecting function changes an association destination from one base station to another, the information is kept. When the terminal FWAtransmits its own upstream ordinary data, a value obtained by multiplying CWmin contained in the QoS parameters notified with an extended beacon EB by the modification parameter of CWmin (to be precise, 1 is added to CWmin contained in the QoS parameters, the sum is multiplied by the modification parameter of CWmin, and then 1 is subtracted therefrom) is set for an H/W transmission queue.

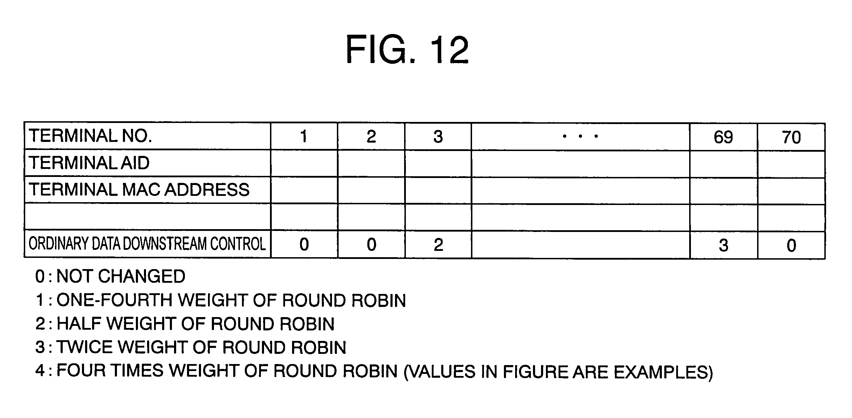

To notify the base station AP of information on the amount of downstream traffic control, the information is included in an association request when the terminal FWA is associated. Details of elements added to an association request format will be described later in "association request format". The base station AP which has received the association request creates a terminal-basis downstream traffic control table shown in Fig. 12. The table is used to increase or decrease an individually-allocated bandwidth by using a weight in dequeuing, during downstream transmission from the base station AP to the terminals FWAs. One of five traffic control values of 1/4, 1/2, 1 (not controlled), 2, and 4 is specified for each of upstream and downstream transmission.

### VoIP priority method

Since VoIP data is transmitted with the highest priority, AIFS is set to 1 (25 µs) and CWmin is set to 1, for downstream transmission. For upstream transmission, AIFS is set to 1 (25 µs) and CWmin is set to any one of the values ranging from 1 to 15 according to the number of terminals. A delay time and a delay fluctuation are taken into consideration to design retransmission parameters such as CWmax. Parameters such as CWmin and CWmax may be determined by each system based on simulation and actual operation results.

### Transmission time equalization function

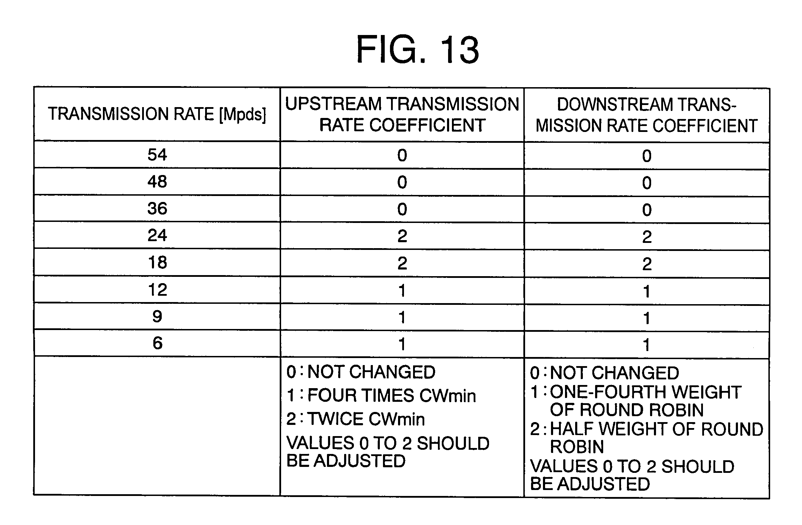

To implement a transmission time equalization (↔ transmission opportunity equalization) function, a dequeue weight in the base station AP for downstream ordinary data to each of the terminals FWAs and the CWmin values in the respective terminals FWAs for upstream ordinary data to the base station AP are made variable based on the transmission rate (the transmission rate changes according to the communication distance between the base station and a terminal). A transmission rate coefficient shown in Fig. 13 is multiplied by the QoS parameter (to be precise, 1 is added to CWmin contained in the QoS parameters, the sum is multiplied by the transmission rate coefficient, and 1 is subtracted therefrom). The transmission rate can be obtained, for example, from the transmission and reception portions (such as 121, 217, and 309).

The transmission time equalization function is set to valid or invalid with an instruction S transmitted from the NMS. This setting is performed by the NMS for the base station AP, and is stored, for example, as a flag in the flash memory (not shown, it is included, for example, in the memory 112 in the base station AP of Fig. 4) in the base station AP. Downstream data transmission reflects this information, and for upstream data transmission, the terminals FWAs recognize the information based on an extended beacon EB from the base station AP.

### Extended-beacon/probe-response format

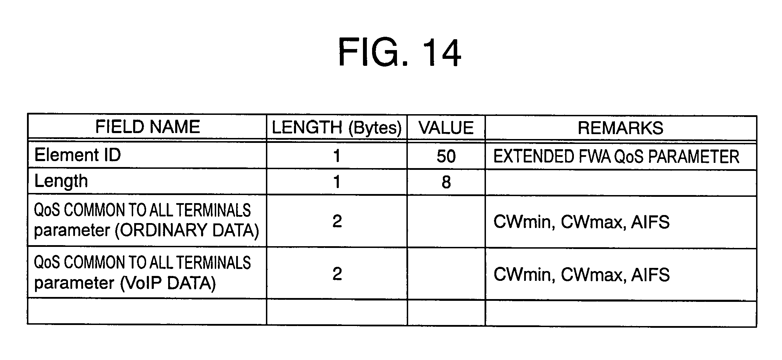

An extended element QoS parameter is added to a beacon and a probe. Fig. 14 shows an example of an extended element "QoS parameter" format.

### Association request format

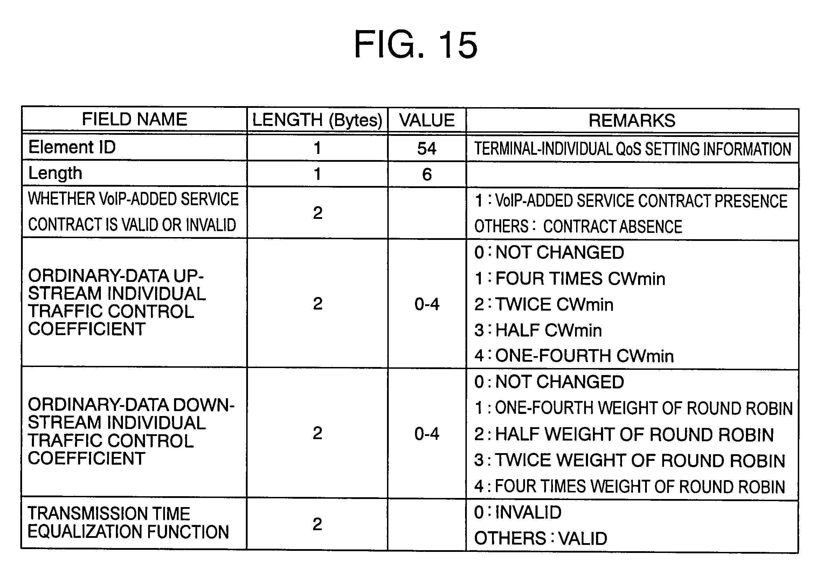

An element for notifying the base station AP of the contents of the individual band-limiting control for a particular user which are set in a terminal FWA by the NMS, an element for VoIP-added service contract status information notification, and a setting of whether the transmission time equalization function is valid or invalid are added to an association request format. Fig. 15 shows an example of an extended element "terminal-basis QoS setting" format.

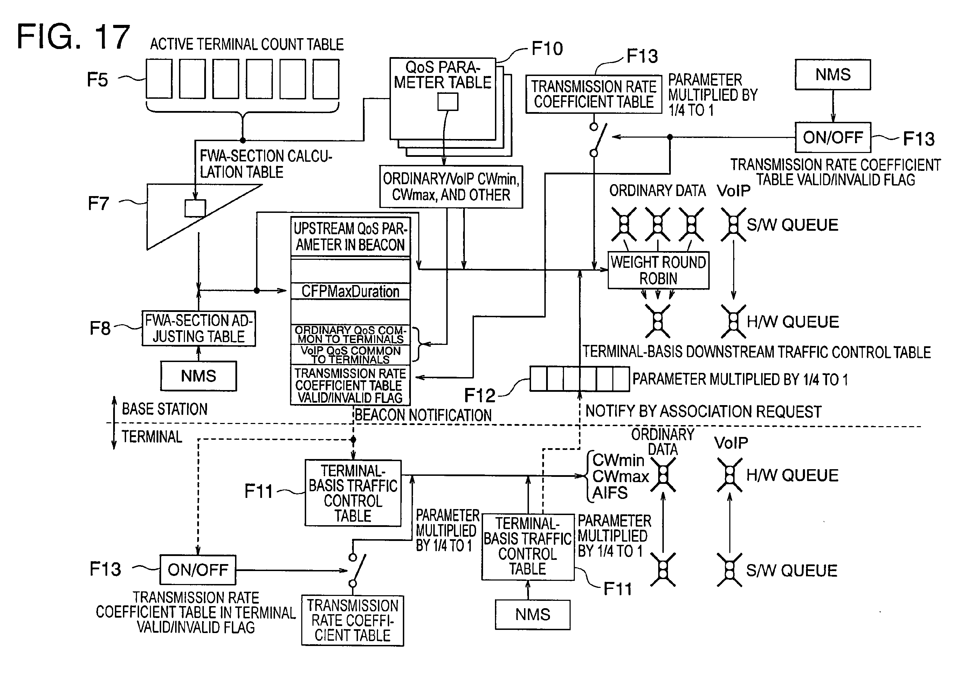

Fig. 17 shows relations among the above-described tables and the QoS parameters in data communications. In Fig. 17, F5 denotes the active terminal count table shown in Fig. 5; F7, the FWA-section calculation table shown in Fig. 7; F8, the FWA-section adjusting table shown in Fig. 8; F10, the QoS parameter tables shown in Figs. 10 (a) and 10 (b) ; F11, the terminal-basis traffic control table shown in Fig. 11; F12, the terminal-basis downstream traffic control table shown in Fig. 12; and F13, the transmission rate coefficient table shown in Fig. 13.

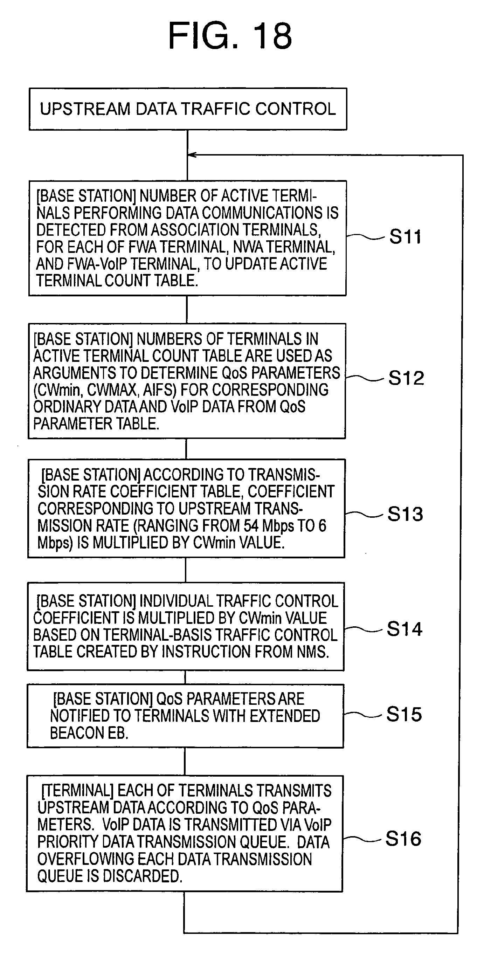

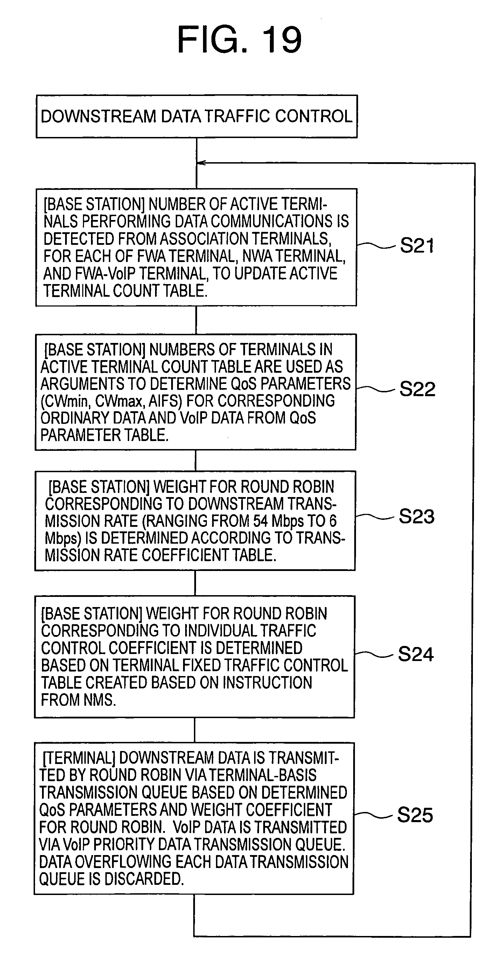

Hereinafter, an example of actual data traffic control with a combination of the above-described functions will be described. Fig. 18 shows a flowchart of upstream data traffic control, and Fig. 19 shows a flowchart of downstream data traffic control.

First, the upstream data traffic control of Fig. 18 will be described. In the base station AP, the number of active terminals which are currently performing data communications is detected from association terminals, for each of the FWA terminals (terminals FWAs), the NWA terminals (terminals NWAs), and FWA-VoIP terminals (FWA terminals performing VoIP-data communications), to update the active terminal count table shown in Fig. 5 (Step S11). Then, terminal counts in the active terminal count table are used as arguments to determine the QoS parameters (CWmin, CWmax, AIFS) for corresponding ordinary data and VoIP data from the QoS parameter table shown in Fig. 10 (Step S12).

According to the transmission rate coefficient table shown in Fig. 13, the coefficient corresponding to the upstream transmission rate (ranging from 54 Mbps to 6 Mbps) is multiplied by the CWmin value (Step S13). Based on an instruction from the NMS, the individual traffic control coefficient is multiplied by the CWmin value based on the terminal-basis traffic control table shown in Fig. 11 (Step S14). The QoS parameters are notified to the terminals (FWA, NWA, FWA-VoIP) with an extended beacon EB (Step S15).

Each of the terminals then transmits upstream data according to the QoS parameters received with the extended beacon EB. VoIP data is transmitted via the VoIP (priority) data transmission queue (209). Data overflowing each data transmission queue is discarded (Step S16).

Next, the downstream data traffic control of Fig. 19 will be described. In the base station AP, the number of active terminals which are currently performing data communications is detected from association terminals, for each of the FWA terminals (terminals FWAs), the NWA terminals (terminals NWAs), and FWA-VoIP terminals (FWA terminals performing VoIP-data communications), to update the active terminal count table shown in Fig. 5 (Step S21). Then, terminal counts in the active terminal count table are used as arguments to determine the QoS parameters (CWmin, CWmax, AIFS) for corresponding ordinary data and VoIP data from the QoS parameter table shown in Fig. 10 (Step S22).

According to the transmission rate coefficient table shown in Fig. 13, the coefficient corresponding to the downstream transmission rate (ranging from 54 Mbps to 6 Mbps) is multiplied by the CWmin value (Step S23). Based on the terminal-basis traffic control tables shown in Figs. 11 and 12 and created based on an instruction from the NMS, a weight for the round robin corresponding to the individual traffic control coefficient is determined (Step S24).

Downstream data is transmitted by the round robin via the transmission queues (105 and 113) for each terminal based on the determined QoS parameters and the weight coefficient for the round robin. VoIP data is transmitted via the VoIP (priority) data transmission queues (107 and 115). Data overflowing each data transmission queue is discarded (Step S25).

As described above, the present invention has been made to provide a wireless LAN communication system using a CSMA method, including: a base station; and plural terminals, the wireless LAN communication system being characterized in that the base station includes: a data classification function for classifying data to be transmitted to the terminals into audio data and terminal-basis ordinary data and generating downstream data communication traffic information; a queuing function for generating an ordinary data transmission queue and an audio data transmission queue by queuing the data classified by the data classification function; a communication quality control parameter setting function for setting communication quality control parameters respectively for the ordinary data transmission queue and the audio data transmission queue; a transmission and reception portion for transmitting data from the ordinary data transmission queue and from the audio data transmission queue according to the communication quality control parameters at a time of transmission; a reception data detection function for acquiring upstream communication traffic information from reception data received from each of the terminals; and a communication quality control parameter control function for dynamically adjusting each of the communication quality control parameters in the communication quality control parameter setting function, based on the downstream and upstream communication traffic information. In the wireless LAN communication system using a CSMA method, communication priority is dynamically changed, based on, for example, a communication state such that communications can be performed more smoothly according to situations.

### Industrial Applicability

The present invention can be applied to wireless LAN communication systems used in many areas.

## Claims

1. A wireless LAN communication system using a CSMA method, comprising:
a base station; and
plural terminals,
the wireless LAN communication system being **characterized in that** the base station comprises:
a data classification means for classifying data to be transmitted to the terminals into audio data and terminal-basis ordinary data and generating downstream data communication traffic information;
a queuing means for generating an ordinary data transmission queue and an audio data transmission queue by queuing the data classified by the data classification means;
a communication quality control parameter setting means for setting communication quality control parameters respectively for the ordinary data transmission queue and the audio data transmission queue;
a transmission and reception portion for transmitting data from the ordinary data transmission queue and from the audio data transmission queue according to the communication quality control parameters at a time of transmission;
a reception data detection means for acquiring upstream communication traffic information from reception data received from each of the terminals; and
a communication quality control parameter control means for dynamically adjusting each of the communication quality control parameters in the communication quality control parameter setting means, based on the downstream and upstream communication traffic information.

2. The wireless LAN communication system according to claim 1, **characterized by** further comprising a queuing weighting control means for controlling a weight in queuing performed by the queuing means, based on the downstream and upstream communication traffic information.

3. The wireless LAN communication system according to claim 1, **characterized in that** the queuing means limits a length of a queue for each of the terminals and discards data overflowing the queue.

4. The wireless LAN communication system according to claim 1, **characterized in that**:
the base station further comprises a terminal communication quality control parameter control means for periodically generating, for each of the terminals, a beacon for adjusting the communication quality control parameters for data transmission in each of the terminals, based on the downstream and upstream communication traffic information; and
at least one of the terminals comprises:
a classification means for classifying data to be transmitted to the base station into audio data and ordinary data;
a communication quality control parameter setting means for setting communication quality control parameters respectively for the audio data and the ordinary data, the communication quality control parameters being respectively and dynamically adjusted by the beacon; and
a transmission and reception portion for transmitting the ordinary data and the audio data based on the communication quality control parameters at the time of transmission.

5. The wireless LAN communication system according to claim 4, **characterized in that** the communication quality control parameter control means and the terminal communication quality control parameter control means control a delay time and a priority of the communication quality control parameters for the audio data to be always shortest and highest, respectively.

6. The wireless LAN communication system according to claim 4, **characterized in that** the base station further comprises a communication control means for creating an active terminal count table, which shows a transmission and reception state at each of the terminals, based on the downstream and upstream communication traffic information; and the communication quality control parameter control means and the terminal communication quality control parameter control means control the communication quality control parameters for downstream and upstream transmission, based on the active terminal count table, such that downstream and upstream ratio in communications is equal.

7. The wireless LAN communication system according to claim 6, **characterized in that**: the base station further comprises a transmission rate coefficient table which shows predetermined transmission rate coefficients for transmission rates to equalize a transmission time in communications; and the transmission rate coefficients are taken into consideration when the communication quality control parameter control means and the terminal communication quality control parameter control means control the communication quality control parameters.

8. The wireless LAN communication system according to claim 6, **characterized by** further comprising a queuing weighting control means for controlling a weight in queuing performed by the queuing means, based on the downstream and upstream communication traffic information, **characterized in that**, with an instruction from an upper side of the base station, the terminal communication quality control parameter control means controls the communication quality control parameter control means in a terminal by the beacon, and the queuing weighting control means controls a weight in queuing performed by the queuing means to control communication traffic to a particular terminal.

9. The wireless LAN communication system according to claim 4, **characterized in that** the beacon generated by the terminal communication quality control parameter control means includes information for making a terminal which is not provided with the terminal communication quality control parameter control means incapable of transmitting data for a given period of time in a beacon period.
